# EUROPEAN PATENT SPECIFICATION

(11) **EP 2 958 772 B1**
(45) Date of publication and mention of the grant of the patent: **21.11.2018**
(21) Application number: 14717474.2
(22) Date of filing: 20.02.2014
(51) Int. Cl.: B60P 7/08, B60R 7/02

(54) **A DEVICE FOR SECURING ITEMS IN A CARGO AREA OF A CAR**
VORRICHTUNG ZUM BEFESTIGEN VON GEGESTÄNDEN IM FRACHTRAUM EINES KRAFTFAHRZEUGES
DISPOSITIF POUR FIXER DES ARTICLES DANS UN ESPACE DE CHARGEMENT D'UN VÉHICULE

(30) Priority: 20.02.2013 IE S20130059
(43) Date of publication of application: 30.12.2015
(73) Proprietor: Millett, Ben, County Roscommon (IE); Harrison, Alan, Ballina, County Mayo (IE); Culleton, Michael, Swords, County Dublin (IE)
(72) Inventor: Millett, Ben, County Roscommon (IE); Harrison, Alan, Ballina, County Mayo (IE); Culleton, Michael, Swords, County Dublin (IE)
(86) International application number: PCT/IB2014/059113
(87) International publication number: WO 2014/128633

(56) References cited:
- WO-A1-96/03293
- WO-A1-97/28022
- WO-A1-97/28022
- DE-U1-202006 018 646
- FR-A1- 2 912 969
- US-A- 4 842 460
- US-A- 5 601 271

## Description

### Field of invention

The invention relates to the securing of items within a car boot or trunk

### Background

Items held loosely in the cargo area of a car often prove problematic when in transit. Loose items may cause damage or become damaged by moving freely whilst the vehicle is in motion. These items may include, but are not limited to, items that are prone to being damaged, causing damage or creating a mess in the cargo area. Items such as heavy items, breakable or fragile items, items of awkward shape, items that may spill their contents. These may include for example potted plants, laptops, wheelchairs, push-chairs, cool-boxes, sports equipment or items (e.g. football, rugby ball, scooters, skateboards etc.), items of shopping (e.g. bottles, tins, foodstuffs, etc.), luggage.

These items if left loose may become damaged or cause damage to other items during transit. The movement of such items within the cargo area may also cause annoyance or anxiety to the driver or passengers of the vehicle.

The devices and products that are available that aim to solve this problem consist of boxes which aim to hold items secure and other products that feature fold up flaps and interior walls that are used to create compartments within the product that can hold items when placed within.

These products are limited to small items or several small items but do not work effectively unless a box or particular compartment is full to the point that there are enough items to prevent other items from moving within that compartment.

The movement of the vehicle can still cause these items to move around within the box or compartmentalised storage unit, or, if movement of the vehicle is sudden enough the box or other storage unit may slide or move around the cargo area also.

The invention is a freestanding wall device according to claim 1 that can secure items against the side wall of a cargo area whilst itself being affixed to the floor of the cargo area. Document US 4842460 A1 discloses a freestanding wall device according to the preamble of claim 1.

### Statement of Invention

The invention is a large, solid, freestanding, plastic 'L' shaped wall which can be affixed to the carpet in a car cargo area and hold loose items securely up against a side wall of the cargo area.

The invention comprises of:
A solid plastic wall with 'L' shaped cross section;
The vertical face of the 'L' provides support for propping items up against, whilst the horizontal face of the 'L' sits on the floor of the cargo area and keeps the unit upright.

A supportive moulded rib structure;
A series of moulded ribs which transfer lateral force exerted on the vertical face of the unit into vertical force acting downwards on the horizontal face of the unit.

An anchoring device to affix the unit to the ground surface within the cargo area; A series of two long continuous strips of hook and loop Velcro material located on the bottom of the unit which serve to anchor the unit to the carpeted floor within a cargo area.

The strips, by being continuous along the bottom of the unit as opposed to being individual pieces located at various degrees of separation allow smooth removal of the unit from the carpeted floor by way of a 'peeling' motion. This is in differentiation to the sudden, jerky motion that would be experienced when removing the unit if individual pieces of velcro were to be used which would cause one end of the unit to suddenly become free when being pulled upwards.

Individual handles on either end of the unit;
Individual handles or grip holes for gripping the unit by hand. These handles are for the ease of lifting the unit and 'peeling' the unit from the carpeted surface. By positioning a handle on either end of the invention as opposed to directly in the middle, as would be found on other products, the user can, with ease, lift one side of the unit, breaking the grip of the velcro on the carpet, and continue to steadily peel the unit away from the carpet facilitated by the continuous strips of velcro. This gives a steady and constant peeling effect. If, however, a handle in the middle of the product were to be used this would result in a higher exertion of force being required to break the grip between the velcro and the carpet and would in turn result in a sudden release which could cause harm to the user or to the product.

The invention is intended to be used to simplify stowage of loose item(s) within a cargo area. Items are placed into the cargo area and the invention is then simply placed against the loose item(s) essentially wedging them against the side wall of the cargo area. Only one unit of the invention is required for satisfactory usage with most objects big or small. With such item that are large the invention can be placed parallel against a section of the item to prohibit movement within one axis or diagonally against a corner of the item to prohibit movement of the item within two axis. For small items the invention can be placed diagonally abutting two of the walls of the cargo area to create a small compartment in which items can be placed. This compartment can be adjusted by altering the angle at which the invention is positioned between the cargo area walls to assure a snug fit for the enclosed item. The use of multiple units of the invention in unison is not required for the restraint of any item big or small.

### Brief Description of the Drawings

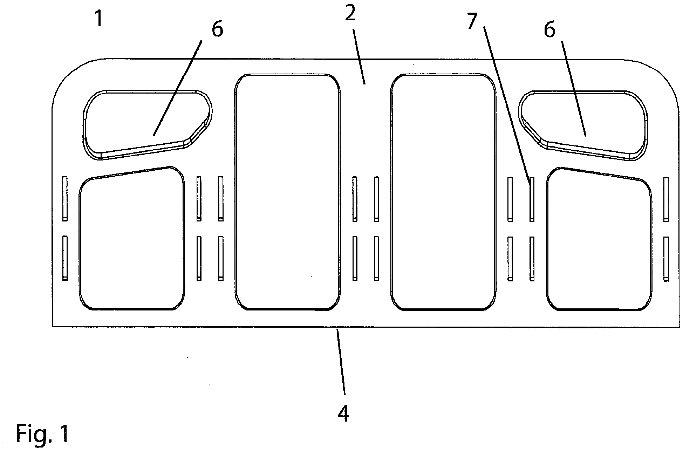

Figure 1 shows a front view according to the invention

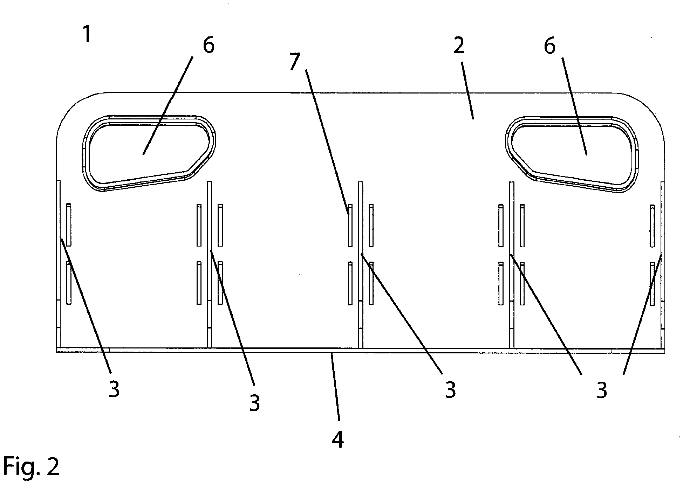

Figure 2 shows a rear view according to the invention

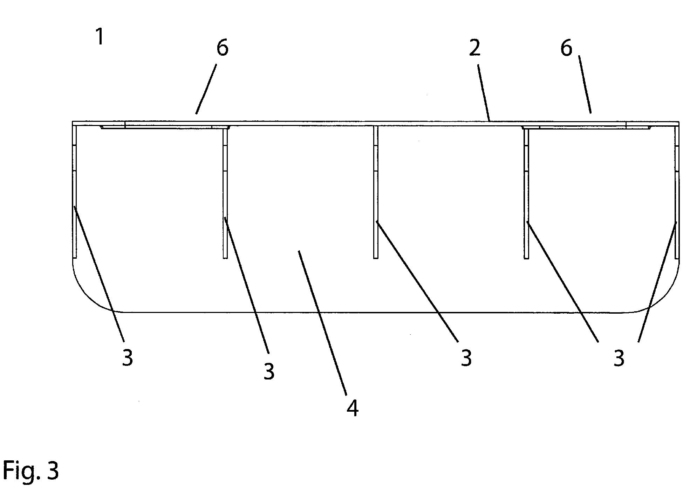

Figure 3 shows a top view according to the invention

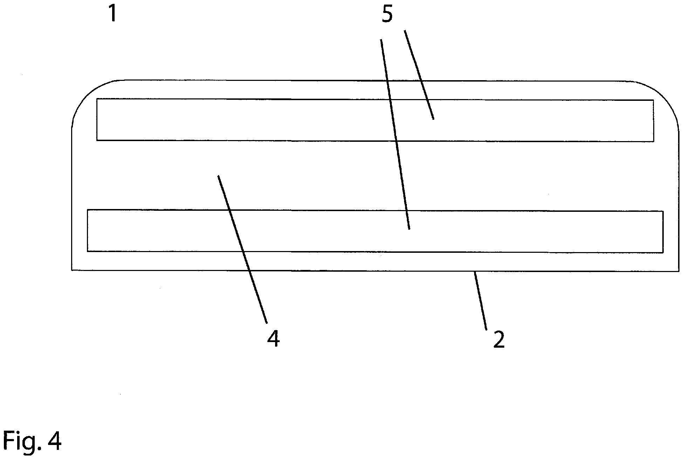

Figure 4 shows a bottom view according to the invention
Figure 5 shows a side view according to the invention

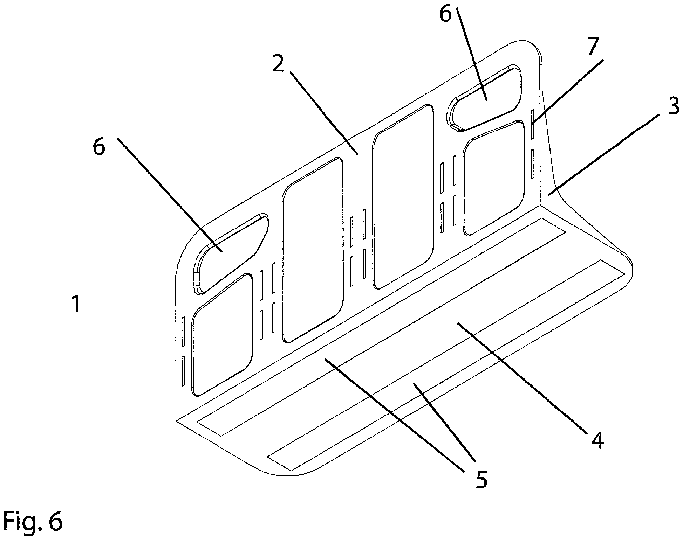

Figure 6 shows an isometric view from a viewpoint below and to the front of the invention

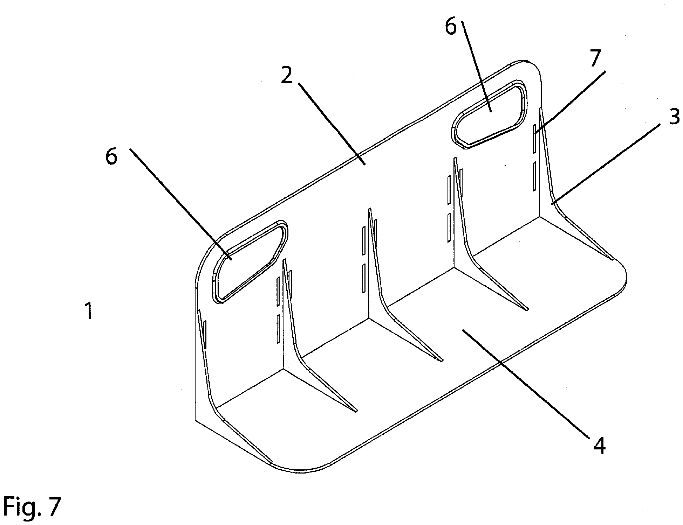

Figure 7 shows an isometric view from a viewpoint above and to the rear of the invention

### Detailed description

Referring to the drawings now, a preferred embodiment of a freestanding wall for securing loose items within a cargo area in a vehicle is illustrated in drawings 1 to 7.

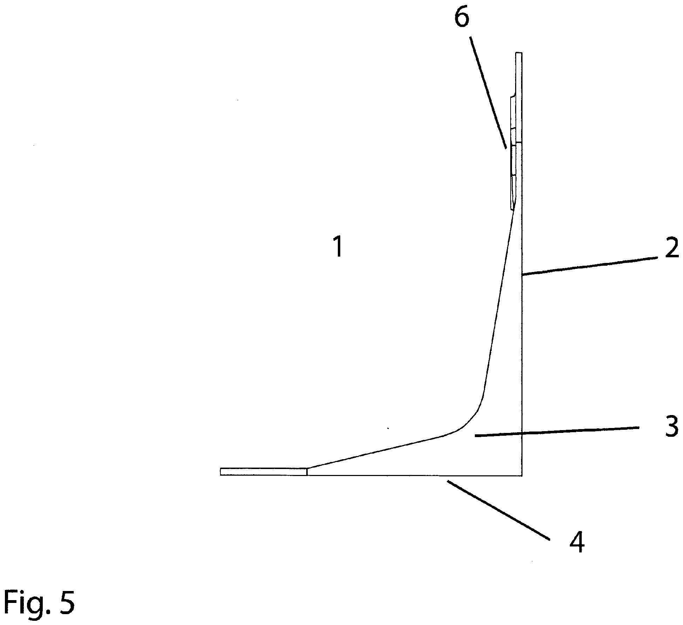

The freestanding wall product (1) is constructed from moulded plastic of a durable and tough nature and is solid throughout offering no hollow areas that may be prone to damage. The product (1) is in an L shape cross section as seen in FIG.5 and the front wall (2) which is used to secure loose items is supported and strengthened by the moulded plastic ribs (3) which transfer lateral force against the front wall to the ground wall (4). The product (1) is one entire solid piece of plastic with the only additions being the long Velcro hook and loop strips (5) which are adhered to the underside of the ground wall (4) with an adhesive. The purpose of the Velcro strips (5) is to fasten and hold in the place the product (1) on the carpeted surface found in the cargo area of cars. In the case of the product (1) the strips used (5) are only the hook material with the carpet acting as the loop material to fulfill the gripping effect. On the front wall (2) are two handles (6) situated on either end of the product (1). Their purpose is to aid the grip and removal of the product (1) from carpeted surface. The handles (6) are such situated on either end of the front wall (2) so as to provide an easy experience for the user. When gripping one handle (6) and lifting upwards this will cause to velcro to break its' grip with the carpet and cause the product (1) to begin to lift upwards. Due to the continuous strips of velcro creating the grip, as the grip is broken the lifting and peeling effect is steady and constant and means the product (1) can be safely removed without any damage to items enclosed within attached accessories (7), items against the product (1) or to the user as a result of a sudden release as would be caused if individual and separate sections of Velcro were used instead of continuous strips. On the front wall (2) there are located several slots (7). These slots (7), which are open on both sides of the front wall (2) are for the connection of accessories which may aid the product (1) with various, related and extra uses.

## Claims

1. A freestanding wall device (1) for securing loose item(s) within a cargo area in a vehicle by propping the item(s) against a side wall of said cargo area and securing them in position comprising;
an L shaped cross section moulded piece with vertical wall (2) and horizontal ground wall (4);
integrally moulded ribs (3) providing support to said vertical wall (2) by way of transferring force to said ground wall (4);
two continuous strips of hook and loop fastener material (5) secured along the underside of ground wall (4) as a means of grip to hold said device (1) in position on a carpeted surface; **characterised in that** the device further comprises two handles (6) located at either end of said vertical wall,
wherein the handles used individually and facilitated by the continuous strips of hook and loop fastener material provide a constant peeling effect when removing said device from a carpeted surface.

## Patentansprüche

1. Eine freistehende Wandvorrichtung (1) zur Sicherung loser Teile im Frachtraum eines Fahrzeugs, indem die losen Teile gegen die Seitenwand des besagten Frachtraums gedrückt und an Ort und Stelle gehalten werden;
Ein L-förmiges Formstück mit einer vertikalen Fläche (2) und einer horizontalen Basis (4);
Integrierte geformte Streben (3), die die besagte vertikale Fläche (2) abstützen, indem die Kraft auf besagte Basis (4) übertragen wird;
Zwei durchgehende Klettverschlüsse (5), die an der Unterseite der Basis (4) angebracht sind, um besagte Vorrichtung (1) auf einer Teppichfläche in Position zu halten;
**Gekennzeichnet dadurch, dass** die Vorrichtung zudem zwei Griffe (6) an jedem Ende besagter vertikaler Fläche aufweist,
wobei die Griffe, die einzeln verwendet und von den durchgehenden Klettverschlüssen ergänzt werden, einen konstanten Peeling-Effekt ermöglichen, wenn besagte Vorrichtung von einer Teppichfläche entfernt wird.

## Revendications

1. Un dispositif de paroi autoportant (1) pour fixer un ou plusieurs objets en vrac dans une zone de chargement d'un véhicule en appuyant le ou les objets contre une paroi latérale de ladite zone de chargement et en les fixant en position comprenant :
une pièce moulée en forme de L à section transversale avec paroi verticale (2) et paroi horizontale au sol (4) ;
des nervures moulées d'un seul tenant (3) fournissant un support à ladite paroi verticale (2) par transfert de force à ladite paroi au sol (4) ;
deux bandes continues de matériau de fixation à boucles et crochets (5) fixées le long de la face inférieure de la paroi au sol (4) en tant que moyen de préhension pour maintenir ledit dispositif (1) en position sur une surface tapissée,
[et **caractérisé par le fait qu'**il comprend en outre] deux poignées (6) situées à chaque extrémité de la dite paroi verticale,
dans lequel les poignées utilisées individuellement et actionnées grâce aux bandes continues de matériau de fermeture à boucles et crochets assurent un effet de séparation constant lors du retrait dudit dispositif d'une surface recouverte de moquette.
